# EUROPEAN PATENT SPECIFICATION

(11) **EP 2 046 844 B1**
(45) Date of publication and mention of the grant of the patent: **15.12.2010**
(21) Application number: 07813318.8
(22) Date of filing: 25.07.2007
(51) Int. Cl.: C08F 6/02

(54) **LITHIUM REDUCTION IN STYRENIC POLYMERS**
Reduzierung des Lithiumgehalts in Polystyrolen
RÉDUCTION AU LITHIUM DANS DES POLYMÈRES STYRÉNIQUES

(30) Priority: 01.08.2006 US 834629 P
(43) Date of publication of application: 15.04.2009
(73) Proprietor: Albemarle Corporation, Baton Rouge, LA 70801 (US)
(72) Inventor: LIN, Ronny, W., Baton Rouge, LA 70815 (US); BALHOFF, John, F., Baton Rouge, LA 70820 (US)
(74) Representative: UEXKÜLL & STOLBERG
(86) International application number: PCT/US2007/074278
(87) International publication number: WO 2008/016810

(56) References cited:
- EP-A1- 0 693 505
- WO-A-01/58962
- US-A1- 2001 029 278
- US-A1- 2003 181 610

## Description

### TECHNICAL FIELD

This invention relates to removal of ionic lithium residues in styrenic polymers produced by anionic polymerization processes.

### BACKGROUND

Polystyrene has many uses in the production of plastic articles and materials. One important use for anionic styrenic polymers is as raw materials for the production of brominated styrenic polymers. Brominated anionic polystyrene is known to be a very useful flame retardant for use in thermoplastics, *e.g*., polybutylene terephthalate, polyethylene terephthalate and nylon. Organolithium compounds are typically used as initiators in the synthesis of anionic styrenic polymers such as anionic polystyrene. In order to effectively brominate the anionic styrenic polymer, it is essential to effectively remove the ionic lithium catalyst residues from the polymer. When the polystyrene is made via anionic polymerization and lithium ions are present, the lithium ions that remain in the product polystyrene can cause problems in further processing of the polystyrene, such as precipitating out as solid lithium salts in process equipment, causing blockage, or the lithium ions remaining in the polystyrene can adversely affect further reactions, *e.g*., bromination, where the lithium ions may react with the solvent used in the bromination process, or interfere with the bromination catalyst.

Methods for anionic polymerization of styrenic monomers to produce styrenic polymers are known in the art; see for example U.S. Pat. No. 6,657,028.

EP 0 693 505 A1 is directed to anionic polymerization of diene monomers and comonomers or monovinyl aromatic compounds using an organolithium initiator. Also, EP 0 693 505 A1 does not provide any information regarding the amount of quenching agent used. US 2001/029278 discloses anionic polymerization initiators that are on particle supports; these supported initiators are used in the form of a slurry. In addition, US 2001/029278 indicates a small amount of quenching agent relative to the polymer. WO 01/58962 is directed to continuous processes for anionic polymerization, but does not have any recommendations for the amount of quenching agent. In Examples 1-6 of WO 01/58962, the temperature in the zone in which the quenching takes place ranges from 15°C to 50°C. US 2003/181610 describes a continuous anionic polymerization process in which the polymerization temperature is kept at 120°C or lower; there is no disclosure in US 2003/181610 about a temperature range for quenching the polymerization. US 2003/181610 recommends small amounts of quenching agent, stating that larger amounts of quenching agent are costly and often cause problematic contamination by remaining with the polymer.

Heretofore, lithium ion has been removed from low M_{w} (∼1000-10000) styrenic polymers by an addition of a small amount of water (1 to 5 moles of water per mole of organolithium initiator), followed by the addition of a larger amount of water (usually one part by weight water per seven parts by weight of styrenic polymer solution) and heating of the mixture to a temperature in the range of 50°C to 70°C. After the heating, the mixture was sent through a coalescer to help separate the aqueous phase from the organic phase and thereby significantly reduce the lithium content of the anionic polystyrene. To separate the aqueous (lithium-containing) and organic (styrenic polymer-containing) phases, the use of a coalescer was generally necessary for low M_{w} anionic styrenic polymers because the water (aqueous phase) was usually suspended in the organic phase as small droplets. It would be desirable to have a method for removing lithium from anionically produced styrenic polymers that does not require a coalescer.

### SUMMARY OF INVENTION

Surprisingly, and pursuant to this invention, a coalescer is not needed to separate the aqueous phase from the organic phase for the removal of lithium ions from styrenic polymers produced by anionic polymerization, even though such styrenic polymers often form emulsions upon mixing with water. These emulsions do not break up when passed through a coalescer. Advantageously, an emulsified mixture can be separated pursuant to this invention. In addition, in this invention, the separation of the aqueous phase containing the lithium ions from the organic phase containing the styrenic polymer can be accomplished without the use of a coalescer. Significant reductions in the amount of lithium ion present with the styrenic polymer have been observed. In particular, on the laboratory scale, levels of lithium ion have been reduced to as little as 18 parts per million (ppm). Thus, this invention provides an efficient method for reducing the amount of lithium ions in a styrenic polymer.

An embodiment of this invention is a process which comprises heating a lithium-containing mixture to one or more temperatures of at least 90 °C and at one or more pressures sufficient to maintain substantially the entire mixture in the liquid phase. The lithium-containing mixture which comprises water, lithium ions, at least one liquid saturated hydrocarbon, and at least one styrenic polymer formed by anionic polymerization. In this process, the water is in an amount of at least 10 wt% relative to the weight of the styrenic polymer, and the styrenic polymer has a weight average molecular weight of at least 1000.

A preferred embodiment of this invention is a process wherein the lithium-containing mixture is formed by an anionic polymerization of at least one styrenic monomer in which at least one organolithium initiator is used to produce a styrenic polymer in a product solution in which the anionic polymerization is terminated with water. The styrenic polymer has a weight average molecular weight of at least 1000. This process comprises heating, after the anionic polymerization has been terminated, at least a portion of said product solution to one or more temperatures of at least 90 °C and at one or more pressures sufficient to maintain substantially the entire portion of product solution being heated in the liquid phase.

These and other embodiments and features of this invention will be still further apparent from the ensuing description and appended claims.

### FURTHER DETAILED DESCRIPTION OF THE INVENTION

Expressions given in parts per million (ppm) in this description are on a weight basis.

The styrenic monomer employed to form the styrenic polymers used in this invention may be any anionically polymerizable styrenic monomer. Suitable non-limiting examples include styrene, o-methylstyrene, m-methylstyrene, p-methylstyrene, α-methylstyrene, ethylstyrene, tert-butylstyrene, dimethylstyrene, and the like, including mixtures of two or more of the foregoing. Preferably, the styrenic monomer consists essentially of styrene. Anionic polymerization of styrene, alone or in the presence of one or more monomers copolymerizable with styrene, is known in the art and the anionic polymerization process is not discussed herein; for a description of one method for anionic polymerization of styrene, see U.S. Pat. No. 6,657,028.

The styrenic polymers undergoing the processes of this invention have a weight average molecular weight (M_{w}) of at least 1000. Anionic styrenic polymers (i.e., styrenic polymers formed using an anionic initiator) in the processes of this invention preferably have a weight average molecular weight in the range of 3000 to 30000. More preferably, the anionic styrenic polymers in the processes of this invention have a weight average molecular weight in the range of 3000 to 15000; especially preferred in the processes of thins invention are anionic styrenic polymers with a weight average molecular weight in the range of 3000 to 12000. The M_{w} is based on a gel permeation chromatography (GPC) technique using a light scattering detector which is well known in the art; for an in-depth description of this technique, see for example international patent publication WO 98/50439.

In an embodiment of this invention, the lithium ion content of a styrenic polymer made via anionic polymerization is reduced. In this process, a lithium-containing mixture is formed from at least one anionic styrenic polymer, at least one liquid saturated hydrocarbon, lithium ions, and water. The amount of liquid saturated hydrocarbon is such that there is 5 wt% to 70 wt%, and more preferably 20 wt% to 60 wt%, of styrenic polymer relative to the combined weight of the styrenic polymer and the liquid saturated hydrocarbon.

The liquid saturated hydrocarbon may be any aliphatic or cycloaliphatic hydrocarbon, or a mixture of two or more of the same, which is liquid under the anionic polymerization reaction conditions. The saturated hydrocarbon preferably contains in the range ofabout four to about twelve carbon atoms in, the molecule. The aliphatic hydrocarbon may be linear or branched. Non-limiting examples of suitable aliphatic hydrocarbons include pentane, isopentane, hexane, 2-methylperitane, octane, 2,2,4-trimethylpentane, and the like. More preferably, the liquid saturated hydrocarbon is one or more liquid saturated cycloaliphatic hydrocarbons. Suitable non-limiting examples of such cycloaliphatic hydrocarbons are cyclopentane, methylcyclopentane, cyclohexane, methylcyclohexane, cycloheptane, 1,3-dimethylcyclohexane, 1,4-dimethylcyclohexane and the like, with cyclohexane being particularly preferred as the liquid saturated hydrocarbon.

In the lithium-containing mixture, the amount of water is at least 10 wt% relative to the weight of the styrenic polymer, and is preferably 20 wt% to 100 wt% relative to the weight of the styrenic polymer. A more preferred amount of water is in the range of 25 wt% to 40 wt% relative to the weight of the styrenic polymer. Larger amounts of water can be used, but are neither necessary nor desirable, as larger amounts of water generally do not considerably increase the amount of lithium ion removed from the styrenic polymer, and will result in larger waste volumes.

The lithium-containing mixture is stirred and heated to a temperature of at least 90 °C, preferably to a temperature in the range of 90 °C to 250 °C. More preferably, the lithium-containing mixture is heated to a temperature in the range of 100 °C to 220 °C. Even more preferred are temperatures in the range of 110 °C to 200 °C. Without wishing to be bound by theory, it is believed that the relatively high temperatures help to break the emulsion that is typically formed in the lithium-containing mixture. An advantage of the high temperatures employed is a decrease in the viscosity of the lithium-containing mixture. In addition, the time for which the lithium-containing mixture needs to be heated is generally relatively short. In particular, on the laboratory scale, heating times are on the order of about one hour. Optionally, prior to heating to a temperature of at least 90°C, the lithium-containing mixture can be heated to a lower elevated temperature, e.g., in the range of 55 °C to 70°C.

The application of increased pressure in the processes of this invention allows the lithium-containing mixture to be heated to high temperatures while maintaining substantially the entire mixture in the liquid phase. The term "increased pressure" as used herein refers to pressures greater than atmospheric pressure. The term "substantially the entire mixture" as used herein indicates that the mixture may deviate slightly from being completely liquid; such small deviations include minor amounts of vapor formation. Preferably, the pressure applied to the lithium-containing mixture is in the range of 20 to 1000 pounds per square inch (1.38x10⁵ to 6.90x10⁶ Pa). More preferably, the pressure is in the range of 20 to 500 pounds per square inch (1.38x10⁵ to 3.45x10⁶ Pa). A convenient and preferred way of performing the processes of the invention is to heat the lithium-containing mixture in an autoclave.

The lithium-containing mixture, after heating, is normally allowed to cool and to form aqueous and organic phases which can be separated by conventional phase separation methods. A large proportion of the lithium ions, usually in the form of lithium hydroxide or one or more lithium salts, is in the aqueous phase, while the styrenic polymer remains in the organic phase.

In a preferred embodiment of this invention, the lithium-containing mixture is formed by anionic polymerization of at least one styrenic monomer in which at least one organolithium initiator is used to produce a styrenic polymer in a product solution, which styrenic polymer has a weight average molecular weight of at least 1000 in which the anionic polymerization is terminated with water. The product solution which is treated to remove lithium ion is comprised predominately of the anionic styrenic polymer and at least one liquid saturated hydrocarbon; also present in the product solution is at least one organolithium initiator and/or its byproducts. After the anionic polymerization has been terminated, water is also present in the product solution. Other species may be present in the product solution, including for example unreacted styrenic monomer and one or more ether promoters. The amount of liquid saturated hydrocarbon in the product solution may vary, but preferably is such that the product solution contains 5 wt% to 70 wt%, and more preferably 20 wt% to 60 wt%, of styrenic polymer; the liquid saturated hydrocarbon is as described above for the lithium-containing mixture.

It is recommended and preferred that when using this water-termination embodiment the amount of water used to terminate the anionic polymerization is in the range of 1 to 10 moles of water per mole of organolithum initiator, and more preferably 1.25 to 5 moles of water per mole of organolithium initiator originally charged. Mixing the product solution together with water terminates the anionic polymerization reaction (usually forming hydrated lithium hydroxide).

Another step that is recommended and preferred to include after the anionic polymerization is terminated and prior to the inventive lithium reduction process step is a another mixing together of water and at least a portion of the product solution. While a second water mixing step without separation of the first amount of water mixed may appear superfluous, mixing water in two separate steps minimizes the possibility that an emulsion will form. In this second water mixing step, the amount of water is at least 10 wt% relative to the weight of the styrenic polymer. Preferably, the water used in this step is 20 wt% to 100 wt% relative to the weight of the styrenic polymer. A more preferred amount of water is in the range of 25 wt% to 40 wt% relative to the weight of the styrenic polymer. As mentioned above, larger amounts of water can be used, but are neither necessary nor desirable, as larger amounts ofwater generally do not considerably increase the amount of lithium ion removed from the styrenic polymer, and will result in larger waste volumes.

The organolithium initiator present in the product solution may be one of many lithium-containing hydrocarbons. Suitable non-limiting examples include methyllithium, ethyllithium, n-butyllithium, sec-butyllithium, isopropyllithium, cyclohexyllithium or phenyllithium, including mixtures of the foregoing.

At least a portion of the product solution, after the anionic polymerization has been terminated, is heated to one or more temperatures of at least 90 °C and at one or more pressures sufficient to maintain substantially the entire portion of product solution being heated in the liquid phase, as described above for the lithium-containing mixture. Preferred temperatures are as described above for the lithium-containing mixture. Increased pressures, including preferred pressures, are also as described above for the lithium-containing mixture. Considerations for the heating of the product solution are as described above for the lithium-containing mixture, including optional heating to a lower elevated temperature. The post-termination mixture, after heating, is normally allowed to cool and to form aqueous and organic phases which can be separated by conventional phase separation means.

In the Examples below, the phases were allowed to separate before determining the amount of lithium present in the organic phase (with the styrenic polymer), and the amount of lithium ion present was determined by ICP with an emission detector.

### EXAMPLE 1

An anionic polymerization of styrene was carried out by feeding styrene (0.7 mol) to a solution of 1 -BuLi (0.0162 mol) and THF (0.0486 mol) in cyclohexane (70 g) at 30-53 ° C, forming polystyrene. Water (3 mol per mol of living polymer or Li^{⊕}) was fed in 4 minutes to deactivate the living polymerization. More water (21 g) was then added. The mixture was stirred at 57-64°C for 10 minutes. After allowing the mixture to settle for 15 minutes, the aqueous and organic phases were allowed to separate; the organic phase (containing the polystyrene and suspended water) was found to contain 88 ppm Li^{⊕}. The mixture (made up of the organic and aqueous phases) was then heated to and stirred at 110°C in an autoclave. After 30 minutes, the organic phase contained 34 ppm of Li^{⊕}. After an additional hour of stirring in the autoclave at 130°C, the organic phase contained 18 ppm Li^{⊕}.

Each mole of organolithium initiator (in this Example, I-BuLi) makes one mole of living polymer, at least theoretically. Thus it is more desirable to use *e.g*., about 3 moles of water per mole of living polymer, rather than per mole of organolithium initiator. However, the amount of organolithium initiator is usually more easily determined than the amount of living polymer, so the amount of water for termination is often referenced to the amount of organolithium initiator.

### EXAMPLE 2

A milky cyclohexane solution of polystyrene (40 wt%; M_{w}, 10,000; formed by anionic polymerization in a manner similar to that in Example 1) which contained 104 ppm Li^{⊕}, and its original water wash (15 wt% relative to the anionic polystyrene solution; 1,170 ppm Li^{⊕}) were combined and charged into an autoclave. This liquid mixture was heated to and stirred at 130°C under pressure. After 1 hour, the organic phase contained 37 ppm Li^{⊕}. After an additional hour of stirring in the autoclave at 150° C, the organic phase contained 24 ppm Li^{⊕}.

It is to be understood that the reactants and components referred to by chemical name or formula anywhere in this document, whether referred to in the singular or plural, are identified as they exist prior to coming into contact with another substance referred to by chemical name or chemical type (*e.g*., another reactant, a solvent, or *etc.*). It matters not what preliminary chemical changes, transformations and/or reactions, if any, take place in the resulting mixture or solution or reaction medium as such changes, transformations and/or reactions are the natural result of bringing the specified reactants and/or components together under the conditions called for pursuant to this disclosure. Thus the reactants and components are identified as ingredients to be brought together in connection with performing a desired chemical operation or reaction or in forming a mixture to be used in conducting a desired operation or reaction. Also, even though an embodiment may refer to substances, components and/or ingredients in the present tense ("is comprised of", "comprises", "is", *etc.*), the reference is to the substance, component or ingredient as it existed at the time just before it was first contacted, blended or mixed with one or more other substances, components and/or ingredients in accordance with the present disclosure.

Also, even though the claims may refer to substances in the present tense (*e.g*., "comprises", "is", *etc.*), the reference is to the substance as it exists at the time just before it is first contacted, blended or mixed with one or more other substances in accordance with the present disclosure.

Except as may be expressly otherwise indicated, the article "a" or "an" if and as used herein is not intended to limit, and should not be construed as limiting, the description or a claim to a single element to which the article refers. Rather, the article "a" or "an" if and as used herein is intended to cover one or more such elements, unless the text expressly indicates otherwise.

## Claims

1. A process which comprises heating a lithium-containing mixture to one or more temperatures of at least 90°C and at one or more pressures sufficient to maintain substantially the entire mixture in the liquid phase, wherein said lithium-containing mixture which comprises water, lithium ions, at least one liquid saturated hydrocarbon, and at least one styrenic polymer formed by anionic polymerization, where the amount of liquid saturated hydrocarbon is such that there is 5 wt% to 70 wt% of styrenic polymer relative to the combined weight of the styrenic polymer and the liquid saturated hydrocarbon, the water is in an amount of at least 10 wt% relative to the weight of the styrenic polymer, and said styrenic polymer has a weight average molecular weight of at least 1000.

2. A process as in Claim 1 wherein the amount of liquid saturated hydrocarbon is such that there is 20 wt% to 60 wt% of styrenic polymer relative to the combined weight of the styrenic polymer and the liquid saturated hydrocarbon.

3. A process as in Claim 1 wherein said styrenic polymer has a weight average molecular weight in the range of 3000 to 30000, and wherein the amount of water is 25 wt% to 40 wt% relative to the weight of the styrenic polymer.

4. A process as in Claim 1 wherein said styrenic polymer has a weight average molecular weight in the range of 3000 to 30000, wherein the amount of water is 25 wt% to 40 wt% relative to the weight of the styrenic polymer, and wherein said heating is to a temperature in the range of 100°C to 220°C.

5. A process as in Claim 1 wherein said styrenic polymer has a weight average molecular weight in the range of 3000 to 30000, wherein the amount of water is 25 wt% to 40 wt% relative to the weight of the styrenic polymer, wherein said heating is to a temperature in the range of 100°C to 220°C, and wherein said pressure is in the range of 1.38x10⁵ Pa (20 pounds per square inch) to 3.45x10⁶ Pa (500 pounds per square inch).

6. A process as in Claim 1 wherein the lithium-containing mixture is formed by an anionic polymerization of at least one styrenic monomer in which at least one organolithium initiator is used to produce a styrenic polymer in a product solution, in which the anionic polymerization is terminated with water.

7. A process as in Claim 1 or 6 wherein said heating is to a temperature in the range of 90°C to 250°C.

8. A process as in Claim 1 or 6 wherein said pressure is in the range of 1.38x10⁵ Pa (20 pounds per square inch) to 6.90x10⁶ Pa (1000 pounds per square inch).

9. A process as in Claim 1 or 6 wherein said styrenic polymer has a weight average molecular weight in the range of 3000 to 30000.

10. A process as in Claim 1 or 6 wherein said styrenic polymer has a weight average molecular weight in the range of 3000 to 15000.

11. A process as in Claim 6 wherein the product solution contains 20 wt% to 60 wt% styrenic polymer.

12. A process as in Claim 1 or 6 wherein the amount of water mixed together with the terminated mixture is 20 wt% to 100 wt% relative to the weight of the styrenic polymer.

13. A process as in Claim 6 wherein said styrenic polymer has a weight average molecular weight in the range of 3000 to 30000, and wherein the amount of water mixed together with the terminated mixture is 25 wt% to 40 wt% relative to the weight of the styrenic polymer.

14. A process as in Claim 1 or 6 wherein said styrenic polymer has a weight average molecular weight in the range of 3000 to 15000, wherein the amount of water mixed together with the terminated mixture is 25 wt% to 40 wt% relative to the weight of the styrenic polymer, and wherein said heating is to a temperature in the range of 100°C to 220°C.

15. A process as in Claim 6 wherein said styrenic polymer has a weight average molecular weight in the range of 3000 to 15000, wherein the amount of water mixed together with the terminated mixture is 25 wt% to 40 wt% relative to the weight of the styrenic polymer, wherein said heating is to a temperature in the range of 100°C to 220°C, and wherein said pressure is in the range of 1.38x10⁵ Pa (20 pounds per square inch) to 3.45x10⁶ Pa (500 pounds per square inch).

## Patentansprüche

1. Verfahren, bei dem eine lithiumhaltige Mischung auf ein oder mehrere Temperaturen von mindestens 90 °C und bei ein oder mehreren Drücken erhitzt wird, die ausreichend sind, um im Wesentlichen die gesamte Mischung in der flüssigen Phase zu halten, wobei die lithiumhaltige Mischung Wasser, Lithiumionen, mindestens einen flüssigen, gesättigten Kohlenwasserstoff und mindestens ein styrolisches Polymer enthält, das durch anionische Polymerisation gebildet worden ist, wobei die Menge an flüssigem, gesättigtem Kohlenwasserstoff eine solche ist, dass es 5 Gew.-% bis 70 Gew.-% styrolisches Polymer, bezogen auf das kombinierte Gewicht des styrolischen Polymers und des flüssigen, gesättigten Kohlenwasserstoffs, gibt, das Wasser in einer Menge von mindestens 10 Gew.-%, bezogen auf das Gewicht des styrolischen Polymers, vorliegt und das styrolische Polymer ein gewichtsgemitteltes Molekulargewicht von mindestens 1000 aufweist.

2. Verfahren nach Anspruch 1, bei dem die Menge an flüssigem, gesättigtem Kohlenwasserstoff eine solche ist, dass es 20 Gew.-% bis 60 Gew.-% styrolisches Polymer, bezogen auf das kombinierte Gewicht des styrolischen Polymers und des flüssigen, gesättigten Kohlenwasserstoffs, gibt.

3. Verfahren nach Anspruch 1, bei dem das styrolische Polymer ein gewichtsgemitteltes Molekulargewicht im Bereich von 3000 bis 30000 aufweist, und bei dem die Menge an Wasser 25 Gew.-% bis 40 Gew.-%, bezogen auf das Gewicht des styrolischen Polymers, beträgt.

4. Verfahren nach Anspruch 1, bei dem das styrolische Polymer ein gewichtsgemitteltes Molekulargewicht im Bereich von 3000 bis 30000 aufweist, bei dem die Menge an Wasser 25 Gew.-% bis 40 Ges.-%, bezogen auf das Gewicht des styrolischen Polymers, beträgt und bei dem auf eine Temperatur im Bereich von 100 °C bis 220 °C erhitzt wird.

5. Verfahren nach Anspruch 1, bei dem das styrolische Polymer ein gewichtsgemitteltes Molekulargewicht im Bereich von 3000 bis 30000 aufweist, bei dem die Menge an Wasser 25 Gew.-% bis 40 Gew.-%, bezogen auf das Gewicht des styrolischen Polymers, beträgt, bei dem auf eine Temperatur im Bereich von 100 °C bis 220 °C erhitzt wird und bei dem der Druck im Bereich von 1,38x10⁵ Pa (20 Pfund pro Quadratzoll) bis 3,45x10⁶ Pa (500 Pfund pro Quadratzoll) liegt.

6. Verfahren nach Anspruch 1, bei dem die lithiumhaltige Mischung durch anionische Polymerisation von mindestens einem styrolischen Monomer gebildet wird, bei der mindestens ein Organolithiuminitiator verwendet wird, um styrolisches Polymer in einer Produktlösung herzustellen, in der die anionische Polymerisation mit Wasser terminiert wird.

7. Verfahren nach Anspruch 1 oder 6, bei dem auf eine Temperatur im Bereich von 90 °C bis 250 °C erhitzt wird.

8. Verfahren nach Anspruch 1 oder 6, bei dem der Druck im Bereich von 1,38x10⁵ Pa (20 Pfund pro Quadratzoll) bis 6,90x10⁶ Pa (1000 Pfund pro Quadratzoll) liegt.

9. Verfahren nach Anspruch 1 oder 6, bei dem das styrolische Polymer ein gewichtsgemitteltes Molekulargewicht im Bereich von 3000 bis 30000 aufweist.

10. Verfahren nach Anspruch 1 oder 6, bei dem das styrolische Polymer ein gewichtsgemitteltes Molekulargewicht im Bereich von 3000 bis 15000 aufweist.

11. Verfahren nach Anspruch 6, bei dem die Produktlösung 20 Gew.-% bis 60 Gew.-% styrolisches Polymer enthält.

12. Verfahren nach Anspruch 1 oder 6, bei dem die Menge an Wasser, die mit der terminierten Mischung zusammengemischt wird, 20 Gew.-% bis 100 Gew.-%, bezogen auf das Gewicht des styrolischen Polymers, beträgt.

13. Verfahren nach Anspruch 6, bei dem das styrolische Polymer ein gewichtsgemitteltes Molekulargewicht im Bereich von 3000 bis 30000 aufweist und bei dem die Menge an Wasser, die mit der terminierten Mischung zusammengemischt wird, 25 Gew.-% bis 40 Gew.-%, bezogen auf das Gewicht des styrolischen Polymers, beträgt.

14. Verfahren nach Anspruch 1 oder 6, bei dem das styrolische Polymer ein gewichtsgemitteltes Molekulargewicht im Bereich von 3000 bis 15000 aufweist, bei dem die Menge an Wasser, die mit der terminierten Mischung zusammengemischt wird, 25 Gew.-% bis 40 Gew.-%, bezogen auf das Gewicht des styrolischen Polymers, beträgt, und bei dem auf eine Temperatur im Bereich von 100 °C bis 220 °C erhitzt wird.

15. Verfahren nach Anspruch 6, bei dem das styrolische Polymer ein gewichtsgemitteltes Molekulargewicht im Bereich von 3000 bis 15000 aufweist, bei dem die Menge an Wasser, die mit der terminierten Mischung zusammengemischt wird, 25 Gew.-% bis 40 Gew.-%, bezogen auf das Gewicht des styrolischen Polymers, beträgt, bei dem auf eine Temperatur im Bereich von 100 °C bis 220 °C erhitzt wird und bei dem der Druck im Bereich von 1,38x10⁵ Pa (20 Pfund pro Quadratzoll) bis 3,45x10⁶ Pa (500 Pfund pro Quadratzoll) liegt.

## Revendications

1. Procédé qui comprend le chauffage d'un mélange contenant du lithium à une ou plusieurs températures d'au moins 90 °C et à une ou plusieurs pressions suffisantes pour maintenir sensiblement le mélange entier dans la phase liquide, dans lequel ledit mélange contenant du lithium comprend de l'eau, des ions lithium, au moins un hydrocarbure liquide saturé, et au moins un polymère styrénique formé par polymérisation anionique, où la quantité d'hydrocarbure liquide saturé est telle qu'il y a 5 % en poids à 7 % en poids de polymère styrénique par rapport au poids combiné du polymère styrénique et de l'hydrocarbure liquide saturé, l'eau est en une quantité d'au moins 10 % en poids par rapport au poids du polymère styrénique, et ledit polymère styrénique a une masse moléculaire moyenne en poids d'au moins 1 000.

2. Procédé selon la revendication 1, dans lequel la quantité d'hydrocarbure liquide saturé est telle qu'il y a 20 % en poids à 60 % en poids de polymère styrénique par rapport au poids combiné du polymère styrénique et de l'hydrocarbure liquide saturé.

3. Procédé selon la revendication 1, dans lequel ledit polymère styrénique a une masse moléculaire moyenne en poids dans l'intervalle de 3 000 à 30 000, et dans lequel la quantité d'eau est de 25 % en poids à 40 % en poids par rapport au poids du polymère styrénique.

4. Procédé selon la revendication 1, dans lequel ledit polymère styrénique a une masse moléculaire moyenne en poids dans l'intervalle de 3 000 à 30 000, dans lequel la quantité d'eau est de 25 % en poids à 40 % en poids par rapport au poids du polymère styrénique, et dans lequel ledit chauffage est à une température dans l'intervalle de 100 °C à 220 °C.

5. Procédé selon la revendication 1, dans lequel ledit polymère styrénique a une masse moléculaire moyenne en poids dans l'intervalle de 3 000 à 30 000, dans lequel la quantité d'eau est de 25 % en poids à 40 % en poids par rapport au poids du polymère styrénique, dans lequel ledit chauffage est à une température dans l'intervalle de 100 °C à 220 °C, et dans lequel ladite pression est dans l'intervalle de 1,38 x 10⁵ Pa (20 livres par pouce carré) à 3,45 x 10⁶ Pa (500 livres par pouce carré).

6. Procédé selon la revendication 1, dans lequel le mélange contenant du lithium est formé par une polymérisation anionique d'au moins un monomère styrénique dans lequel au moins un inducteur de type organolithium est utilisé pour produire un polymère styrénique dans une solution de produit, dans lequel la polymérisation anionique est terminée avec de l'eau.

7. Procédé selon la revendication 1 ou 6, dans lequel ledit chauffage est à une température dans l'intervalle de 90 °C à 250 °C.

8. Procédé selon la revendication 1 ou 6, dans lequel ladite pression est dans l'intervalle de 1,38 x 10⁵ Pa (20 livres par pouce carré) à 6,90 x 10⁶ Pa (1 000 livres par pouce carré).

9. Procédé selon la revendication 1 ou 6, dans lequel ledit polymère styrénique a une masse moléculaire moyenne en poids dans l'intervalle de 3 000 à 30 000.

10. Procédé selon la revendication 1 ou 6, dans lequel ledit polymère styrénique a une masse moléculaire moyenne en poids dans l'intervalle de 3 000 à 15 000.

11. Procédé selon la revendication 6 dans lequel la solution de produit contient 20 % en poids à 60 % en poids de polymère styrénique.

12. Procédé selon la revendication 1 ou 6, dans lequel la quantité d'eau mélangée conjointement au mélange terminé est de 20 % en poids à 100 % en poids par rapport au poids du polymère styrénique.

13. Procédé selon la revendication 6, dans lequel ledit polymère styrénique a une masse moléculaire moyenne en poids dans l'intervalle de 3000 à 30 000, et dans lequel la quantité d'eau mélangée conjointement au mélange terminé est de 25 % en poids à 40 % en poids par rapport au poids du polymère styrénique.

14. Procédé selon la revendication 1 ou 6, dans lequel ledit polymère styrénique a une masse moléculaire moyenne en poids dans l'intervalle de 3 000 à 15 000, dans lequel la quantité d'eau mélangée conjointement au mélange terminé est de 25 % en poids à 40 % en poids par rapport au poids du polymère styrénique, et dans lequel ledit chauffage est à une température dans l'intervalle de 100 °C à 220 °C.

15. Procédé selon la revendication 6, dans lequel ledit polymère styrénique a une masse moléculaire moyenne en poids dans l'intervalle de 3 000 à 15 000, dans lequel la quantité d'eau mélangée conjointement au mélange terminé est de 25 % en poids à 40 % en poids par rapport au poids du polymère styrénique, dans lequel ledit chauffage est à une température dans l'intervalle de 100 °C à 220 °C, et dans lequel ladite pression est dans l'intervalle de 1,38 x 10⁵ Pa (20 livres par pouce carré) à 3,45 x 10⁶ Pa (500 livres par pouce carré).
